(19) Europäisches Patentamt
European Patent Office
Office européen des brevets

(11) **EP 2 396 380 B1**

(12) **EUROPEAN PATENT SPECIFICATION**

(45) Date of publication and mention of the grant of the patent:
**15.04.2015 Bulletin 2015/16**

(51) Int Cl.:
*C09K 5/10* (2006.01)   *C23F 11/00* (2006.01)
*F24J 2/46* (2006.01)

(21) Application number: **10705405.8**

(86) International application number:
**PCT/GB2010/000268**

(22) Date of filing: **15.02.2010**

(87) International publication number:
**WO 2010/092360 (19.08.2010 Gazette 2010/33)**

(54) **HEAT TRANSFER FLUID**

WÄRMETRÄGERFLÜSSIGKEIT

FLUIDE DE TRANSFERT THERMIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **13.02.2009 IN DE02892009**

(43) Date of publication of application:
**21.12.2011 Bulletin 2011/51**

(73) Proprietor: **Alpha Fry Limited**
**Woking, Surrey GU21 5RZ (GB)**

(72) Inventors:
• **PURAKKAT, Savitha**
  **Yeshwanthpur Bangalore 560 022 (IN)**
• **JASSAL, Mukesh**
  **Woking**
  **Surrey GU21 5RZ (GB)**

(74) Representative: **Boult Wade Tennant**
**Verulam Gardens**
**70 Gray's Inn Road**
**London WC1X 8BT (GB)**

(56) References cited:
EP-A1- 1 010 740    WO-A1-2005/047419
DE-A1- 2 540 251    GB-A- 856 924
US-A1- 2003 127 624    US-A1- 2008 048 147

• DATABASE WPI Week 200259 Thomson Scientific, London, GB; AN 2002-553622 XP002582130 -& JP 2002 188074 A (NIPPON CHEM KOGYO KK) 5 July 2002 (2002-07-05)
• L. WANG, C. TIU, T.-J. LIU: "Effects of nonionic surfactant and associative thickener on the rheology of polyacrylamide in aqueous glycerol solutions" COLLOID POLYM. SCI., [Online] vol. 274, no. 2, 1 February 1996 (1996-02-01), pages 138-144, XP002582131 Heidelberg DOI: 10.1007/BF00663445

Remarks:
The file contains technical information submitted after the application was filed and not included in this specification

**Description**

The present invention relates to new formulations for heat transfer fluids.

Heat transfer fluids have a wide range of applications in industrial, commercial or domestic settings. For example, heat transfer fluids are used in solar thermal collectors (also known as solar panels) or ground source heat pumps (also known as geothermal heat pumps).

Formulations for heat transfer fluids must overcome a range of practical constraints. For example, water based heat transfer fluids may give rise to corrosion in the system in which they are employed. Therefore reducing corrosion is a necessary goal in the formulation of heat transfer fluids. Also, the high viscosity of heat transfer fluids which comprise, for example, glycerine (in particular at low temperatures) can cause difficulties in the circulation of the heat transfer fluid through the relevant system. In addition, heat transfer fluids are often required to function through a wide range of temperatures, for example from below the freezing point of water (for example -25°C or colder) to temperatures considerably higher than the boiling point of water (for example around 250 to 300°C, or even higher).

Relevant background knowledge of the skilled person would include industry guidance. For example the Domestic Water Treatment Association (DWTA) was established in the UK in 2004 with an objective to introduce and promote product and installation quality standards for the chemical water treatment sector. DWTA industry standard procedures for the water treatment and assays for, *inter alia,* corrosion studies would be familiar to the person skilled in the art. See in particular the "DWTA Industry Standard Specification for the Performance of Chemical Inhibitors for Use in Domestic Hot Water Central Heating Systems" published in August 2006.

Water-based heat transfer fluids are known which comprise aqueous mixtures of ethylene glycol, propylene glycol and ethanol. Ethylene glycol is one of the best known heat transfer fluids, and it is used in particular in the automobile industry. However, the use of ethylene glycol has disadvantages in that the substance is toxic and is not very environment-friendly. Propylene glycol is often used instead of ethylene glycol in applications in which less toxic properties are required. Although propylene glycol is relatively non-toxic, it is, nevertheless, a substance which pollutes the environment. One disadvantage of propylene glycol is the great increase in its viscosity at low temperatures; this increases the required pump power.

Heat transfer fluids comprising mixtures of water and glycerine (also known as glycerol) are already known in the art. The use of glycerine in such fluids is desirable for a number of reasons, including the high heat capacity of glycerine, its very low freezing point, its ready availability and low cost, along with its safety from a biological and environmental perspective.

DE2540251 discloses non-toxic water-containing antifreeze.

EP1010740 discloses a concentrated and diluted cooling liquid.

WO2005047419 discloses a nontoxic watery solution against freezing and corrosion.

GB856924 discloses aqueous hydraulic fluids and heat exchange media.

US2003127624 discloses a heating medium composition, and a method for feeding an oxidation inhibitor to a heat exchange apparatus.

US2008048147 discloses a method for manufacturing antifreeze.

JP2002188074 discloses a resistance-reducing liquid composition.

"Effects of nonionic surfactant and associative thickener on the rheology of polyacrylamide in aqueous glycerol solutions" by L. WANG, C. TIU, T.-J. LIU, COLLOID POLYM. SCI., vol. 274, no. 2, 1 February 1996 (1996-02-01), pages 138-144, discloses the rheology of polyacrylamide in aqueous glycerol solutions.

However, there are particular draw backs for heat transfer fluids comprising water and glycerine, in particular the high viscosity of glycerine at low temperatures (as might be encountered in a solar thermal collection system, or ground source heat pump system at night or during cold weather) would tend to restrict the flow of fluid and decrease the efficiency of heat transfer. In addition, water/glycerine systems are not compatible with certain well known corrosion inhibitor formulations.

The present inventors have identified new formulations for heat transfer fluids which comprise a surfactant for reducing the viscosity of the fluid and also have advantageous characteristics for corrosion inhibition, a high thermal capacity and help to protect the fluid from degradation at high temperatures.

It is an objective of the present invention to provide, overcome or at least mitigate some of the problems associated with prior art heat transfer fluids and to provide an improved heat transfer fluid, or to provide a commercially viable alternative to known compositions.

SUMMARY OF THE INVENTION

According to a first aspect, the present invention provides a heat transfer fluid comprising water, glycerine (also known as glycerol), and a surfactant, wherein the surfactant comprises decaethylene glycol monododecyl ether. The present inventors have developed heat transfer fluid formulations with superior characteristics for heat transfer, corrosion inhibition, low viscosity and high temperature stability. They are particularly well suited for use in ground source heat pumps or solar thermal collectors.

The present inventors have surprisingly found that their formulations, in particular their choice of surfactants, leads to greater compatibility between water/glycerine mixtures and other additives (such as corrosion or scaling inhibitors) than would otherwise be expected. Furthermore, the formulations have a number of the benefits associated with glycol-containing formulations without requiring the inclusion of this environmentally disadvantageous compound.

Glycerine has a low freezing point and its presence in water based heat transfer fluids helps to prevent freezing at low and very low temperatures. Glycerine also has a high heat capacity, is cheap and readily available, and is safe biologically and environmentally.

However, glycerine also has a high viscosity and its presence in heat transfer fluids would tend to increase their viscosity accordingly. When glycerine is present in excess of 60%(w/w) the viscosity is too high for most applications. In addition, water/glycerine mixtures were known to be incompatible with many existing anti-corrosion or anti-scaling additives used in other heat transfer fluids. Thus, despite its ready availability and low cost, the high viscosity of glycerine along with its incompatibility with known corrosion inhibitors has not encouraged its use in prior art heat transfer fluids.

The presence of the surfactant in the formulation of the invention assists in reducing the viscosity of the fluid to an acceptable level. The specific surfactants and quantities of surfactants used have the advantage of providing a particularly low viscosity and also advantageous characteristics with regard to the inhibition of corrosion and the stability of the heat transfer fluids of the invention, in particular thermal stability. They also permit the use of known anti-corrosion and anti-scaling additives.

The heat transfer fluid preferably comprises a corrosion inhibitor, or a thermal stabiliser, or a combination of two or more thereof.

Corrosion inhibitors are preferably selected from tolyl triazole, benzotriazole, aspartic acid, sebacic acid, borax, molybdic oxide, sodium molybdate dihydrate, morpholine, or a combination of two or more thereof. Sodium molybdate dihydrate is an advantageous additive in aluminium (Al) containing systems since it works especially well as an Al corrosion inhibitor. The total amount of corrosion inhibitor in the heat transfer fluid is preferably from 0.01 to 0.5% (w/w).

Thermal stabilisers are preferably selected from tetra (2-hydroxypropyl) ethylenediamine (also known as quadrol polyol), polyethyleneglycol, pentaerythritol or a combination of two or more thereof. The total amount of thermal stabiliser in the heat transfer fluid is preferably from 0.1 to 1% (w/w). Sodium hydroxide may also be added as a stabiliser in an amount of less than 0.05% (w/w), although this is in addition to any thermal stabiliser that may be present. Sodium hydroxide serves to stabilise the glycerine component of the composition and is preferably present in an amount of at least 0.01 % (w/w).

Some of the above preferred thermal stabilisers and corrosion inhibitors perform secondary functions in the fluid. However, the primary function of the additives is key in determining their purpose in the present composition. Of note, tetra (2-hydroxypropyl) ethylenediamine also helps to maintain the pH.

The heat transfer fluid as disclosed herein is described in relation to the % (w/w) of each of the components added. It will be appreciated that the balance of these components is preferably water. During manufacture, some unavoidable impurities may be introduced into the fluid as well. Preferably such unavoidable impurities should be less than 5% (w/w), preferably less than 1% (w/w), more preferably less than 0.1% (w/w) and most preferably less than 0.01% (w/w). Ideally there are no unavoidable impurities present.

The heat transfer fluid may further comprises one or more of:

    (i) a pH stabiliser or buffer, such as triisopropanol amine or borax;
    (ii) an antiscaling additive, such as sodium polyacrylate polymer; and
    (iii) a biocide, such as nipacide.

Biocides include acticides, such as nipacide (available e.g. from Clariant UK Ltd. or Thor Group Ltd) which serve to kill algae. The heat transfer fluid may also comprise mono-propylene glycol (MPG) as a solvent in place of some of the water in the composition. Preferably there is less than 10% (w/w) MPG in the fluid.

Preferably the surfactant is present in a quantity of from 0.01% (w/w) to 1.0% (w/w). In a particularly preferred embodiment the quantity of surfactant is from 0.01% (w/w) to 0.5% (w/w). In a still more preferred embodiment the quantity of surfactant is from 0.01% (w/w) to 0.35% (w/w). At these levels, very good viscosity and corrosion inhibition characteristics may be achieved.

The surfactant preferably further comprises:

    (i) triethanolamine and/or
    (ii) a glycerol ethoxylate.

The surfactant comprises decaethylene glycol monododecyl ether which is a polyoxyethylene (n) lauryl ether

EP 2 396 380 B1

where n =10. This compound is also known as polyoxyethylene (10) lauryl ether.

The surfactant may comprise an ethoxylated glycerine. These are also known as glycerol ethoxylates and are of the formula:

$$H(OCH_2CH_2)_nOCH_2CHO((CH_2CH_2O)_nH)CH_2O(CH_2CH_2O)_nH$$

Preferably the value of n is independently selected in the above formulation from 1 to 10, more preferably from 1 to 6, and most preferably from 1 to 4. More commonly, glycerol ethoxylates are sold by molecular weight. Preferably the molecular weight of the glycerol ethoxylate used in the present invention is from 320 to 800, and most preferably from 320 to 450. As the molecular weight increases the viscosity of the surfactant increases.

These surfactants, in particular, decaethylene glycol monododecyl ether, show excellent characteristics in the reduction of viscosity and also the inhibition of corrosion. Decaethylene glycol monododecyl ether also has secondary thermal stabiliser and corrosion inhibitor properties and so, advantageously may be used in place or in addition to other compounds which provide such functionalities. When determining the total amount of thermal stabiliser and/or corrosion inhibitor in the composition, however, the amount of surfactant having such secondary properties is not counted.

In a preferred embodiment the amount of glycerine is from 30% (w/w) to 60% (w/w). In a more preferred embodiment the amount of glycerine is from 35% (w/w) to 50% (w/w). In a still more preferred embodiment the amount of glycerine is from 40% (w/w) to 50% (w/w). In a still more preferred embodiment the amount of glycerine is from 43% (w/w) to 47% (w/w). In the most preferred embodiments the amount of glycerine is 45% (w/w). These amounts of glycerine provide a suitable viscosity combined with an appropriate heat capacity for the fluid. They also help to reduce corrosion.

Typical ranges for components of the heat transfer fluid are provided below. Where a value of 0.0% is given it indicates that component may be entirely absent. The glycerine is present in an amount of from 35.0% (w/w) to 50.0% (w/w). The water is present in an amount of from 43.15% to 59.45 % (w/w) and preferably provides the balance of the composition, together with any unavoidable impurities.

surfactants:

| decaethylene glycol monododecyl ether | |
| more preferably | from 0.01 % (w/w) to 0.5% (w/w) |
| triethanolamine | from 0.0% (w/w) to 0.1 % (w/w) |
| more preferably | from 0.01% (w/w) to 0.1% (w/w) |
| Glycerol ethoxylate | from 0.0% (w/w) to 1% (w/w) |
| more preferably | from 0.01% (w/w) to 0.5% (w/w) |

Preferably the glycerol ethoxylate has n values from 4-5.

thermal stabilisers:

| tetra (2-hydroxypropyl) ethylenediamine | from 0.0% (w/w) to 1% (w/w) |
| more preferably | from 0.2% (w/w) to 1.0% (w/w) |
| polyethyleneglycol | from 0.0% (w/w) to 1% (w/w) |
| more preferably | from 0.02% (w/w) to 1.0% (w/w) |
| pentaerythritol | from 0.0% (w/w) to 0.1% (w/w) |
| more preferably | from 0.01% (w/w) to 0.1% (w/w) |

corrosion inhibitors:

| | |
|---|---|
| tolyl triazole | from 0.0% (w/w) to 1.5% (w/w) |
| more preferably | from 0.2% (w/w) to 1.5% (w/w) |
| benzotriazole | from 0.0% (w/w) to 0.5% (w/w) |
| more preferably | from 0.01 % (w/w) to 0.5% (w/w) |
| aspartic acid | from 0.0% (w/w) to 0.25% (w/w) |
| more preferably | from 0.01 % (w/w) to 0.25% (w/w) |
| sebacic acid | from 0.0% (w/w) to 0.5% (w/w) |
| more preferably | from 0.01 % (w/w) to 0.5% (w/w) |
| molybdic oxide | from 0.0% (w/w) to 0.3% (w/w) |
| more preferably | from 0.01% (w/w) to 0.3% (w/w) |
| sodium molybdate dihydrate | from 0.0% (w/w) to 0.1% (w/w) |
| more preferably | from 0.01% (w/w) to 0.1% (w/w) |
| morpholine | from 0.0% (w/w) to 0.1% (w/w) |
| more preferably | from 0.01% (w/w) to 0.1% (w/w) |
| borax | from 0.0% (w/w) to 1.0% (w/w) |
| more preferably | from 0.01% (w/w) to 1.0% (w/w) |

others:

| | |
|---|---|
| sodium hydroxide | from 0.0% (w/w) to 0.1% (w/w) |
| more preferably | from 0.01% (w/w) to 0.1% (w/w) |
| mono-propylene glycol | from 0.0% (w/w) to 10% (w/w) |
| more preferably | from 0.01% (w/w) to 10% (w/w) |
| sodium polyacrylate polymer (antiprex) | from 0.0% (w/w) to 0.5% (w/w) |
| more preferably | from 0.05% (w/w) to 0.5% (w/w) |
| triisopropanol amine | from 0.0% (w/w) to 0.5% (w/w) |
| more preferably | from 0.01% (w/w) to 0.5% (w/w) |
| biocide (e.g. nipacide or acticide) | from 0.0% (w/w) to 1.5% (w/w) |
| more preferably | from 0.01 % (w/w) to 1.5% (w/w) |

As discussed above, unavoidable impurities may also be present. It is especially preferred that the above preferred ranges are used in combination with each other.

Preferably the heat transfer fluid comprises:

a) from 35.0% (w/w) to 50.0% (w/w) glycerine,
b) and 39.5% (w/w) to 59.97% (w/w) water.

at least one of:

c1) from 0.01% (w/w) to 0.5% (w/w) decaethylene glycol monododecyl ether,

c2) from 0.01% (w/w) to 0.1% (w/w) triethanolamine,
c3) from 0.01 % (w/w) to 1 % glycerol ethoxylate,

at least one of:

d1) from 0.2% (w/w) to 1.0% (w/w) tetra (2-hydroxypropyl) ethylenediamine,
d2) from 0.02% (w/w) to 1.0% (w/w) polyethyleneglycol,
d3) from 0.01% (w/w) to 0.1% (w/w) pentaerythritol,

at least one of:

e1) from 0.2% (w/w) to 1.5% (w/w) tolyl triazole,
e2) from 0.01% (w/w) to 0.5% (w/w) benzotriazole e3) from 0.01% (w/w) to 0.25% (w/w) aspartic acid,
e4) from 0.01% (w/w) to 0.5% (w/w) sebacic acid e5) from 0.01% (w/w) to 0.1% (w/w) sodium molybdate dihydrate
e6) from 0.01% (w/w) to 0.1% (w/w) morpholine,
e7) from 0.01% (w/w) to 0.3% (w/w) molybdic oxide,
e8) from 0.01% (w/w) to 1.0% (w/w) borax,

and optionally one or more of,

f) from 0.05% (w/w) to 0.5% (w/w) sodium polyacrylate polymer
g) from 0.01% (w/w) to 0.5% (w/w) triisopropanol amine,
h) from 0.01% (w/w) to 0.05% (w/w) sodium hydroxide,
i) from 0.01 % (w/w) to 1.5% (w/w) of a biocide,
j) from 0.01 to 10% (w/w) mono-propylene glycol.

More preferably the composition comprises:

a) from 40.0% (w/w) to 50.0% (w/w) glycerine,
b) and 40.65% (w/w) to 59.44% (w/w) water.

at least one of:

c1) from 0.01% (w/w) to 0.5% (w/w) decaethylene glycol monododecyl ether,
c2) from 0.01 % (w/w) to 0.1 % (w/w) triethanolamine,
c3) from 0.01 % (w/w) to 1 % glycerol ethoxylate,

and:

d1) from 0.2% (w/w) to 1.0% (w/w) tetra (2-hydroxypropyl) ethylenediamine,
d2) from 0.02% (w/w) to 1.0% (w/w) polyethyleneglycol,
d3) from 0.01% (w/w) to 0.1% (w/w) pentaerythritol,

and:

e1) from 0.2% (w/w) to 1.5% (w/w) tolyl triazole,
e3) from 0.01% (w/w) to 0.25% (w/w) aspartic acid,
e6) from 0.01 % (w/w) to 0.1 % (w/w) morpholine,
e7) from 0.01% (w/w) to 0.3% (w/w) molybdic oxide,
e8) from 0.01% (w/w) to 1.0% (w/w) borax,

and,

f) from 0.05% (w/w) to 0.5% (w/w) sodium polyacrylate polymer
g) from 0.01% (w/w) to 0.5% (w/w) triisopropanol amine,

and optionally one or more of,

h) from 0.01% (w/w) to 0.05% (w/w) sodium hydroxide,
i) from 0.01 % (w/w) to 1.5% (w/w) of a biocide.
j) from 0.01 to 10% (w/w) mono-propylene glycol

According to a specific embodiment, the heat transfer fluid may comprise:

a) 43-47% (w/w) glycerine,
b) 50.24% (w/w) to 55.50% (w/w) water,
c1) 0.075-0.125% (w/w) decathylene glycol monododecyl ether,
c2) 0.25-0.35% (w/w) triethanolamine;
d1) 0.25-0.75% (w/w) tetra (2-hydroxypropyl) ethylenediamine,
d2) 0.075-0.125% (w/w) polyethyleneglycol
d3) 0.025-0.075% (w/w) pentaerythritol;
e1) 0.25-0.35% (w/w) tolyltriazole,
e3) 0.025-0.075% (w/w) aspartic acid,
e6) 0.04-0.08% (w/w) morpholine,
e7) 0.01-0.03% (w/w) molybdic oxide;
e8) 0.35-0.55% (w/w) borax,
f) 0.075-0.125% (w/w) sodium polyacrylate polymer; and
g) 0.075-0.125% (w/w) triisopropanol amine.

More preferably, the fluid comprises 45% (w/w) glycerine; the surfactants 0.1% (w/w) decathylene glycol monododecyl ether and 0.3% (w/w) triethanolamine; the corrosion inhibitors 0.3% (w/w) tolyltriazole, 0.05% (w/w) aspartic acid, 0.45% (w/w) borax, 0.06% (w/w) morpholine and 0.02% (w/w) molybdic oxide; the thermal stabilisers 0.5% (w/w) tetra (2-hydroxypropyl) ethylenediamine, 0.1% (w/w) polyethyleneglycol, 0.05% (w/w) pentaerythritol; 0.1% (w/w) sodium polyacrylate polymer; 0.1% (w/w) triisopropanol amine; and the balance water and unavoidable impurities. This is the formulation referred to as BIC73.
Other heat transfer fluids not covered by the present invention may comprise:

a) 43-47% (w/w) glycerine;
b) 52.765% (w/w) to 56.875% (w/w) water,
c2) 0.01-0.02% (w/w) triethanolamine;
e1) 0.01-0.02% (w/w) tolyltriazole,
e4) 0.01-0.02% (w/w) sebacic acid
e7) 0.01-0.02% (w/w) molybdic oxide;
f) 0.075-0.125% (w/w) sodium polyacrylate polymer; and
i) 0.01-0.03% (w/w) of the biocide nipacide.

More preferably, the fluid comprises 45% (w/w) glycerine; the surfactant 0.01% (w/w) triethanolamine; the corrosion inhibitors 0.013% (w/w) tolyltriazole, 0.01% (w/w) sebacic acid and 0.01% (w/w) molybdic oxide; 0.1% (w/w) sodium polyacrylate polymer; 0.02% (w/w) nipacide; and
the balance water and unavoidable impurities. This is the formulation referred to as A6. A6 is not an embodiment of the invention.
Other heat transfer fluids not covered by the present invention fluid may comprise:

a) 37.5-42.5% (w/w) glycerine;
b) 46.1% (w/w) to 56.945%(w/w) water,
c2) 0.01-0.02% (w/w) triethanolamine,
c3) 0.25-0.75% (w/w) glycerol ethoxylate,
d1) 0.1-0.25% (w/w) tetra (2-hydroxypropyl) ethylenediamine
d3) 0.075-0.125% (w/w) pentaerythritol
e1) 0.075-0.125% (w/w) tolyltriazole
e5) 0.01-0.05% (w/w) sodium molybdate dihydrate;
g) 0.025-0.075% (w/w) triisopropanol amine;
h) 0.01-0.05% (w/w) sodium hydroxide
j) 5-10% (w/w) mono-propylene glycol;

More preferably, the fluid comprises 40% (w/w) glycerine; the surfactants 0.5% (w/w) glycerol ethoxylate and 0.01% (w/w) triethanolamine; the corrosion inhibitors 0.034% (w/w) sodium molybdate dihydrate and 0.1% (w/w) tolyltriazole; the thermal stabilisers 0.175% (w/w) tetra (2-hydroxypropyl) ethylenediamine and 0.1% (w/w) pentaerythritol; 8% (w/w) mono-propylene glycol;

0.05% (w/w) triisopropanol amine; 0.035% (w/w) sodium hydroxide; and the balance water and unavoidable impurities. This formulation is referred to herein as N1. The N1 formulation is especially preferred since it provides comparable heat-transfer performance as the S1, while avoiding the use of environmentally hazardous glycols. The N1 formulation is not an embodiment of the invention.

The present invention further provides a solar panel system, comprising a heat transfer fluid according to the invention. The present invention yet further provides ground source heat pump system comprising a heat transfer fluid according to the invention.

Still further provided is use of a heat transfer fluid comprising water, glycerine and the surfactant in a solar panel system or a ground source heat pump system.

In preferred embodiments the heat transfer fluid further comprises a corrosion inhibitor and/or a thermal stabiliser for improved corrosion inhibition and/or thermal stability of the fluid in use. In particularly preferred embodiments, the heat transfer fluid is as defined in any of the other aspects of the invention and has the advantages described above.

The invention will now be described by way of exemplification only.

Formulations according to the present invention (BIC73) give rise to rapid heat transfer, with peak heat transfer occurring after approximately 14 minutes. Performance is comparable to a known prior art formulation Solar S1 (available from Fernox).

The comparative viscosity of the heat transfer fluid according to the present invention (BIC73, a heat transfer fluid not covered by the present invention (A6) and a known prior art formulation Solar S1 (available from Fernox) have been investigated.

Thermal stability experiments have been carried out for formulation BIC73. The infra red spectrum of untreated fluid was compared to that obtained after heating in copper pipe at 270°C for three hours, or after thermal cycling from -25°C to 140°C for three days (20 cycles). The similarity of the spectrum obtained for control fluid and for heat treated fluids indicates minimal degradation of the fluid at high temperature or during thermal cycling.

Corrosion studies using formulations comprising, water and glycerine and percentages of decaethylene glycol monododecyl ether, tetra (2-hydroxypropyl) ethylenediamine and polyethylene glycol have been performed. The level of corrosion is measured in mm/yr. The duration of the study was 14 days and the study was conducted according to standard DWTA procedures.

DETAILED DESCRIPTION OF THE INVENTION

The present invention provides numerous formulations for superior heat transfer fluids. Table 1 below provides details for two formulations. BIC73 is preferred in particular for solar applications and the comparative formulation A6 for ground source heat pump applications. Unavoidable impurities may be present in these formulations.

Table 1

| Component (% (w/w)) | Formulation | |
|---|---|---|
| | BIC73 | A6 |
| tetra (2-hydroxypropyl) ethylenediamine | 0.5 | |
| polyethyleneglycol | 0.1 | |
| tolyl triazole | 0.3 | |
| benzotriazole | | 0.013 |
| acticide (nipacide) | | 0.02 |
| triisopropanol amine | 0.1 | |
| aspartic acid | 0.05 | |
| sebacic acid | | 0.01 |
| borax | 0.45 | |
| sodium polyacrylate polymer (antiprex) | 0.1 | 0.1 |
| molybdic oxide | 0.02 | 0.01 |

(continued)

| Component (% (w/w)) | Formulation | |
| --- | --- | --- |
| | BIC73 | A6 |
| triethanolamine | 0.3 | 0.01 |
| morpholine | 0.06 | |
| pentaerythritol | 0.05 | |
| decaethylene glycol monododecyl ether | 0.01 | |
| glycerine | 45 | 45 |
| water | balance | balance |

Prior art heat transfer fluids were also used for comparison. These included Solar S1 (Fernox) and Tyfocor LS (TLS). TLS is a propylene glycol-water based fluid available from Tyforop Chemie GmbH.

### Examples

Example 1 - Rapid heat transfer

Heat transfer studies were carried out in a custom built jacketed glass vessel with a digital thermometer attached. The fluid whose heat transfer capacity is to be measured was poured in the outer jar while the inner jar was filled with boiling water. The whole setup was kept in a thermally insulated box. Heat transfer capacity was measured as the maximum temperature obtained by the fluid in the outer vessel and the time taken to reach the maximum temperature.
Good heat transfer characteristics were observed for all formulations according to the invention. Heat transfer rates were comparable to those of prior art heat transfer fluids.
Results for formulations BIC73 and A6 are comparable with the prior art formulation Solar S1 (formulation F19.8 commercialised in 2008 and available from Fernox).

Example 2 - Comparative viscosity

Kinetic viscosity of the fluids is measured using Brookefield viscometer at different temperatures.
As anticipated, lower viscosity was observed for all formulations at higher temperatures. Viscosity increased at lower temperatures. Formulations TLS (prior art competitor product) and Solar S1 (formulation F19.8 commercialized in 2008) performed with roughly equivalent viscosity values. BIC73 and comparative formulation A6 showed lower viscosity at temperatures of approximately -10°C. This superior, lower, viscosity would also be anticipated to be observed at even lower temperatures on the basis of the 'viscosity curve'.

Example 3 - Thermal stability

**1. High temperature stability:**

10 ml of the test solution was placed in a 25cm copper pipe sealed with brass compression caps and placed at 270°C for 3 hours. Initial and final pH and IR spectra of the test solution were compared to detect whether degradation had occurred.

**2. Thermal cycling:**

10 ml of the test solution was placed in a 25cm copper pipe sealed with brass compression caps and cycled between -25°C and 140°C for 3 days (20 cycles). Initial and final pH and IR spectra of the test solution were compared to detect degradation.
The initial pH was 7.12. The pH after 3 hours at 270°C was 6.71, the pH after thermal cycling as described was 6.81.
The similarity of the IR spectra and pH values obtained for untreated heat transfer fluid, and fluid which had been subjected to high temperatures, or thermal cycling between low and high temperature indicates that little degradation occurred and that the fluid is stable under these conditions.

Example 4 - Corrosion studies

Corrosion values were obtained using DWTA procedure as outlined in "DWTA Industry Standard Specification for the Performance of Chemical Inhibitors for Use in Domestic Hot Water Central Heating Systems".

In brief, metallic test coupons (copper, brass, aluminium) were rotated in a test solution at 200rpm +/- 20rpm for 14 days with thermal cycling between 25 deg C and 80 deg C. Following this, the test coupons were cleaned and mass loss calculated.

The corrosion rate C, expressed in mm/year is given by the equation:

$$C = \frac{10M}{\rho A} \times \frac{365}{30}$$

$$= \frac{260.7M}{\rho A}$$

Where

A is the surface area of the coupon (cm2);
M is the corrected mass loss (g);
$\rho$ is the density of the metal (g/cm3)

The values of A and $\rho$ are given in Table 3 below.

Table 3

| Metal | Surface Area, A (cm2) | Density, $\rho$ (g/cm3) |
|---|---|---|
| Copper | 26.0 | 8.90 |
| Aluminium | 26.0 | 2.70 |
| Brass | 26.0 | 8.55 |

Corrosion values obtained using the heat transfer fluid formulations of the invention may be: for copper, 0.0033mm/yr, for brass, 0.0029mm/yr and for aluminium 0.0628 mm/yr. Corrosion data was obtained by mass loss experiments conducted according to standard DWTA procedure (i.e. as specified in "DWTA Industry Standard Specification for the Performance of Chemical Inhibitors for Use in Domestic Hot Water Central Heating Systems" of August 2006). The test was conducted for 14 days with thermal cycling between 25°C and 80°C.

Optimisation studies carried out by the inventors identified that the effect of tetra (2-hydroxypropyl) ethylenediamine on the inhibition of corrosion could mask the beneficial effect of polyethylene glycol and surfactants from the group of polyoxyethylene (n) lauryl ethers, for example decaethylene glycol monododecyl ether.

Thus the technical results obtained by the inventors so far seem to indicate that lower quantities (for example from 0.2%(w/w) to 1.0%(w/w), or more preferably from 0.3%(w/w) to 0.5%(w/w)) of tetra (2-hydroxypropyl) ethylenediamine (also known as quadrol polyol) are preferred from the perspective of inhibition of corrosion. Under these conditions (i.e. using lower quantities of quadrol polyol), higher quantities of polyethylene glycol (for example 0.02%(w/w) to 1.0%(w/w) or more preferably 0.1 %(w/w) to 0.5%(w/w)), and to a lesser extent, decaethylene glycol monododecyl ether (for example 0.01%(w/w) to 0.5%(w/w), or more preferably, from 0.01 to 0.05%(w/w)) provided better results.

In addition, the formulations of the present invention (particularly, BIC73) show advantageous thermal stability. The formulations of the invention are stable when held at high temperature or cycled between high and low temperatures. Without wishing to be bound by theory, the present inventors speculate that the presence of the surfactant also protects the fluid from thermal degradation.

## Claims

1. A heat transfer fluid comprising water, glycerine, and a surfactant, wherein the surfactant comprises decaethylene glycol monododecyl ether.

2. A heat transfer fluid according to claim 1, wherein the fluid further comprises a corrosion inhibitor, preferably selected from tolyl triazole, benzotriazole, aspartic acid, sebacic acid, borax, molybdic oxide, triethanolamine, sodium molybdate dihydrate, morpholine, or a combination of two or more thereof.

3. A heat transfer fluid according to claim 1 or claim 2, wherein the fluid further comprises a thermal stabiliser.

4. A heat transfer fluid according to claim 3, wherein the thermal stabiliser is selected from tetra (2-hydroxypropyl) ethylenediamine, polyethyleneglycol, pentaerythritol or a combination of two or more thereof.

5. A heat transfer fluid according to any of the preceding claims, wherein the fluid further comprises one or more of:

   (i) a pH stabiliser or buffer, such as triisopropanol amine or borax;
   (ii) an antiscaling additive, such as sodium polyacrylate polymer; and
   (iii) a biocide, such as nipacide.

6. A heat transfer fluid according to any of the preceding claims, further comprising sodium hydroxide.

7. A heat transfer fluid according to any of the preceding claims, wherein the surfactant is present in a quantity of from 0.01% (w/w) to 1.0% (w/w).

8. A heat transfer fluid according to any one of the preceding claims, wherein the surfactant further comprises:

   (i) triethanolamine; and/or
   (ii) a glycerol ethoxylate.

9. A heat transfer fluid according to any of the preceding claims, wherein the glycerine is present in an amount of from 30% (w/w) to 60% (w/w).

10. A heat transfer fluid according to any of claims 1-10, comprising:

   a) from 35.0% (w/w) to 50.0% (w/w) glycerine,
   b) and 39.5% (w/w) to 59.97% (w/w) water,

at least one of:

   c1) from 0.01% (w/w) to 0.5% (w/w) decaethylene glycol monododecyl ether,
   c2) from 0.01% (w/w) to 0.1% (w/w) triethanolamine,
   c3) from 0.01 % (w/w) to 1 % glycerol ethoxylate,

at least one of:

   d1) from 0.2% (w/w) to 1.0% (w/w) tetra (2-hydroxypropyl) ethylenediamine,
   d2) from 0.02% (w/w) to 1.0% (w/w) polyethyleneglycol,
   d3) from 0.01% (w/w) to 0.1% (w/w) pentaerythritol,

at least one of:

   e1) from 0.2% (w/w) to 1.5% (w/w) tolyl triazole,
   e2) from 0.01% (w/w) to 0.5% (w/w) benzotriazole,
   e3) from 0.01 % (w/w) to 0.25% (w/w) aspartic acid,
   e4) from 0.01% (w/w) to 0.5% (w/w) sebacic acid,
   e5) from 0.01% (w/w) to 0.1% (w/w) sodium molybdate dihydrate,
   e6) from 0.01% (w/w) to 0.1% (w/w) morpholine,
   e7) from 0.01% (w/w) to 0.3% (w/w) molybdic oxide,
   e8) from 0.01% (w/w) to 1.0% (w/w) borax,

and optionally one or more of,

    f) from 0.05% (w/w) to 0.5% (w/w) sodium polyacrylate polymer,
    g) from 0.01% (w/w) to 0.5% (w/w) triisopropanol amine,
    h) from 0.01% (w/w) to 0.05% (w/w) sodium hydroxide,
    i) from 0.01 % (w/w) to 1.5% (w/w) of a biocide,
    j) from 0.01 to 10% (w/w) mono-propylene glycol.

**11.** A heat transfer fluid according to claim 10, comprising:

    a) from 40.0% (w/w) to 50.0% (w/w) glycerine,
    b) and 40.65% (w/w) to 59.44% (w/w) water,

at least one of:

    c1) from 0.01% (w/w) to 0.5% (w/w) decaethylene glycol monododecyl ether,
    c2) from 0.01% (w/w) to 0.1% (w/w) triethanolamine,
    c3) from 0.01 % (w/w) to 1 % glycerol ethoxylate,

and:

    d1) from 0.2% (w/w) to 1.0% (w/w) tetra (2-hydroxypropyl) ethylenediamine,
    d2) from 0.02% (w/w) to 1.0% (w/w) polyethyleneglycol,
    d3) from 0.01% (w/w) to 0.1% (w/w) pentaerythritol,

and:

    e1) from 0.2% (w/w) to 1.5% (w/w) tolyl triazole,
    e3) from 0.01 % (w/w) to 0.25% (w/w) aspartic acid,
    e6) from 0.01% (w/w) to 0.1% (w/w) morpholine,
    e7) from 0.01 % (w/w) to 0.3% (w/w) molybdic oxide,
    e8) from 0.01% (w/w) to 1.0% (w/w) borax,

and,

    f) from 0.05% (w/w) to 0.5% (w/w) sodium polyacrylate polymer,
    g) from 0.01% (w/w) to 0.5% (w/w) triisopropanol amine,

and optionally one or more of,

    h) from 0.01% (w/w) to 0.05% (w/w) sodium hydroxide,
    i) from 0.01 % (w/w) to 1.5% (w/w) of a biocide,
    j) from 0.01 to 10% (w/w) mono-propylene glycol.

**12.** A heat transfer fluid according to claim 10 or 11, comprising:

    a) 43-47% (w/w) glycerine,
    b) 50.24% (w/w) to 55.50% (w/w) water,
    c1) 0.075-0.125% (w/w) decaethylene glycol monododecyl ether,
    c2) 0.25-0.35% (w/w) triethanolamine,
    d1) 0.25-0.75% (w/w) tetra (2-hydroxypropyl) ethylenediamine,
    d2) 0.075-0.125% (w/w) polyethyleneglycol
    d3) 0.025-0.075% (w/w) pentaerythritol,
    e1) 0.25-0.35% (w/w) tolyltriazole,
    e3) 0.025-0.075% (w/w) aspartic acid,
    e6) 0.04-0.08% (w/w) morpholine,
    e7) 0.01-0.03% (w/w) molybdic oxide,
    e8) 0.35-0.55% (w/w) borax,

f) 0.075-0.125% (w/w) sodium polyacrylate polymer, and

g) 0.075-0.125% (w/w) triisopropanol amine.

**13.** A solar panel system comprising a heat transfer fluid according to any one of claims 1 to 12.

**14.** A ground source heat pump system comprising a heat transfer fluid according to any one of claims 1 to 12.

**15.** Use of a heat transfer fluid according to any of claims 1 to 12, in a solar panel system or a ground source heat pump system.

**Patentansprüche**

**1.** Wärmeträgerflüssigkeit, umfassend Wasser, Glycerin und einen oberflächenaktiven Stoff, wobei der oberflächenaktive Stoff Decaethylenglycol-Monododecylether umfasst.

**2.** Wärmeträgerflüssigkeit nach Anspruch 1, wobei die Flüssigkeit weiter einen Korrosionsinhibitor, bevorzugt ausgewählt aus Tolyltriazol, Benzotriazol, Asparaginsäure, Sebacinsäure, Borax, Molybdänoxid, Triethanolamin, Natriummolybdat-Dihydrat, Morpholin oder eine Kombination von zwei oder mehreren davon, umfasst.

**3.** Wärmeträgerflüssigkeit nach Anspruch 1 oder Anspruch 2, wobei die Flüssigkeit weiter einen Wärmestabilisator umfasst.

**4.** Wärmeträgerflüssigkeit nach Anspruch 3, wobei der Wärmestabilisator ausgewählt ist aus tetra(2-Hydroxypropyl)ethylendiamin, Polyethylenglycol, Pentaerythritol oder einer Kombination von zwei oder mehreren davon.

**5.** Wärmeträgerflüssigkeit nach einem der vorhergehenden Ansprüche, wobei die Flüssigkeit weiter einen oder mehrere von:

(i) einem pH-Stabilisator oder Puffer, wie Triisopropanolamin oder Borax;
(ii) einem Antibelag-Additiv, wie Natriumpolyacrylatpolymer; und
(iii) einem Biozid, wie Nipacid,

umfasst.

**6.** Wärmeträgerflüssigkeit nach einem der vorhergehenden Ansprüche, weiter umfassend Natriumhydroxid.

**7.** Wärmeträgerflüssigkeit nach einem der vorhergehenden Ansprüche, wobei der oberflächenaktive Stoff in einer Menge von 0,01% (w/w) bis 1,0% (w/w) vorhanden ist.

**8.** Wärmeträgerflüssigkeit nach einem der vorhergehenden Ansprüche, wobei der oberflächenaktive Stoff weiter umfasst:

(i) Triethanolamin; und/oder
(ii) ein Glycerolethoxylat.

**9.** Wärmeträgerflüssigkeit nach einem der vorhergehenden Ansprüche, wobei das Glycerin in einer Menge von 30% (w/w) bis 60% (w/w) vorhanden ist.

**10.** Wärmeträgerflüssigkeit nach einem der Ansprüche 1-10, umfassend:

a) von 35,0% (w/w) bis 50,0% (w/w) Glycerin,
b) und 39,5% (w/w) bis 59,97% (w/w) Wasser,

mindestens einen von:

c1) von 0,01% (w/w) bis 0,5% (w/w) Decaethylenglycol-Monododecylether,
c2) von 0,01% (w/w) bis 0,1% (w/w) Triethanolamin,

c3) von 0,01% (w/w) bis 1% Glycerol-Ethoxylat,

mindestens einen von:

d1) von 0,2% (w/w) bis 1,0% (w/w), Tetra(2-hydroxypropyl)ethylendiamin,
d2) von 0,02% (w/w) bis 1,0% (w/w) Polyethylenglykol,
d3) von 0,01% (w/w) bis 0,1% (w/w) Pentaerythritol,

mindestens einen von:

e1) von 0,2% (w/w) bis 1,5% (w/w) Tolyltriazol,
e2) von 0,01% (w/w) bis 0,5% (w/w) Benzotriazol,
e3) von 0,01% (w/w) bis 0,25% (w/w) Asparaginsäure,
e4) von 0,01% (w/w) bis 0,5% (w/w) Sebacinsäure,
e5) von 0,01% (w/w) bis 0,1% (w/w) Natriummolybdat-Dihydrat,
e6) von 0,01% (w/w) bis 0,1% (w/w) Morpholin,
e7) von 0,01% (w/w) bis 0,3% (w/w) Molybdänoxid,
e8) von 0,01% (w/w) bis 1,0% (w/w) Borax,

und gegebenenfalls einen oder mehrere von,

f) von 0,05% (w/w) bis 0,5% (w/w) Natriumpolyacrylatpolymer,
g) von 0,01% (w/w) bis 0,5% (w/w), Triisopropanolamin,
h) von 0,01% (w/w) bis 0,05% (w/w) Natriumhydroxid,
i) von 0,01 % (w/w) bis 1,5% (w/w) eines Biozids,
j) von 0,01 bis 10% (w/w) Monopropylenglykol.

11. Wärmeträgerflüssigkeit nach Anspruch 10, umfassend:

a) von 40,0% (w/w) bis 50,0% (w/w) Glycerin,
b) und 40,65% (w/w) bis 59,44% (w/w) Wasser,

mindestens einen von:

c1) von 0,01% (w/w) bis 0,5% (w/w) Decaethylenglycol Monododecylether,
c2) von 0,01% (w/w) bis 0,1% (w/w) Triethanolamin,
c3) von 0,01% (w/w) bis 1% Glycerol-ethoxylat,

und:

d1) von 0,2% (w/w) bis 1,0% (w/w), Tetra(2-hydroxypropyl)ethylendiamin,
d2) von 0,02% (w/w) bis 1,0% (w/w) Polyethylenglykol,
d3) von 0,01% (w/w) bis 0,1% (w/w) Pentaerythritol,

und:

e1) von 0,2% (w/w) bis 1,5% (w/w) Tolyltriazol,
e3) von 0,01% (w/w) bis 0,25% (w/w) Asparaginsäure,
e6) von 0,01% (w/w) bis 0,1% (w/w) Morpholin,
e7) von 0,01% (w/w) bis 0,3% (w/w) Molybdänoxid,
e8) von 0,01% (w/w) bis 1,0% (w/w) Borax,

und,

f) von 0,05% (w/w) bis 0,5% (w/w) Natriumpolyacrylatpolymer,
g) von 0,01% (w/w) bis 0,5% (w/w) Triisopropanolamin, und gegebenenfalls einen oder mehrere von,
h) von 0,01% (w/w) bis 0,05% (w/w) Natriumhydroxid,
i) von 0,01 % (w/w) bis 1,5% (w/w) eines Biozids,

j) von 0,01 bis 10% (w/w) Monopropylenglykol.

**12.** Wärmeträgerflüssigkeit nach Anspruch 10 oder 11, umfassend:

a) 43-47% (w/w) Glycerin,
b) 50,24% (w/w) bis 55,50 (w/w) Wasser,
c1) 0,075-0,125% (w/w) Decaethylenglycol-Monododecylether,
c2) 0,25-0,35% (w/w) Triethanolamin,
d1) 0,25-0,75% (w/w) Tetra(2-hydroxypropyl)ethylendiamin,
d2) 0,075-0,125% (w/w) Polyethylenglykol,
d3) 0,025-0,075% (w/w) Pentaerythritol,
e1) 0,25-0,35% (w/w) Tolyltriazol,
e3) 0,025-0,075% (w/w) Asparaginsäure,
e6) 0,04-0,08% (w/w) Morpholin,
e7) 0,01-0,03% (w/w) Molybdänoxid,
e8) 0,35-0,55% (w/w) Borax,
f) 0,075-0,125% (w/w) Natriumpolyacrylatpolymer und
g) 0,075-0,125% (w/w) Triisopropanolamin.

**13.** Sonnenkollektorsystem, umfassend eine Wärmeträgerflüssigkeit nach einem der Ansprüche 1 bis 12.

**14.** Erdwärmepumpensystem, umfassend eine Wärmeträgerflüssigkeit nach einem der Ansprüche 1 bis 12.

**15.** Verwendung einer Wärmeträgerflüssigkeit nach einem der Ansprüche 1 bis 12 in einem Sonnenkollektorsystem oder einem Erdwärmepumpensystem.


**Revendications**

**1.** Fluide de transfert de chaleur comprenant de l'eau, de la glycérine, et un tensioactif, où le tensioactif comprend de l'éther monododécylique de décaéthylène glycol.

**2.** Fluide de transfert de chaleur selon la revendication 1, dans lequel le fluide comprend en outre un inhibiteur de corrosion, de préférence choisi parmi le tolyltriazole, le benzotriazole, l'acide aspartique, l'acide sébacique, le borax, l'oxyde molybdique, la triéthanolamine, le molybdate de sodium dihydraté, la morpholine, ou une combinaison de deux ou plus de ceux-ci.

**3.** Fluide de transfert de chaleur selon la revendication 1 ou 2, dans lequel le fluide comprend en outre un stabilisant thermique.

**4.** Fluide de transfert de chaleur selon la revendication 3, dans lequel le stabilisant thermique est choisi parmi le tétra(2-hydroxypropyl)éthylènediamine, le polyéthylèneglycol, le pentaérythritol ou une combinaison de deux ou plus de ceux-ci.

**5.** Fluide de transfert de chaleur selon l'une des revendications précédentes, dans lequel le fluide comprend en outre un élément ou plus parmi :

(i) un stabilisant de pH ou un tampon, tel que la triisopropanolamine ou le borax ;
(ii) un additif antitartre, tel qu'un polymère de polyacrylate de sodium ; et
(iii) un biocide, tel que le nipacide.

**6.** Fluide de transfert de chaleur selon l'une des revendications précédentes, comprenant en outre de l'hydroxyde de sodium.

**7.** Fluide de transfert de chaleur selon l'une des revendications précédentes, dans lequel le tensioactif est présent en une quantité allant de 0,01% (p/p) à 1,0% (p/p).

**8.** Fluide de transfert de chaleur selon l'une quelconque des revendications précédentes, dans lequel le tensioactif comprend en outre :

> (i) de la triéthanolamine ; et/ou
> (ii) un éthoxylate de glycérol.

**9.** Fluide de transfert de chaleur selon l'une des revendications précédentes, dans lequel la glycérine est présente en une quantité allant de 30% (p/p) à 60% (p/p).

**10.** Fluide de transfert de chaleur selon l'une des revendications 1 à 10, comprenant :

> a) de 35,0% (p/p) à 50,0% (p/p) de glycérine,
> b) et de 39,5% (p/p) à 59,97% (p/p) d'eau,

au moins l'un parmi :

> c1) de 0,01% (p/p) à 0,5% (p/p) d'éther monododécylique de décaéthylène glycol,
> c2) de 0,01% (p/p) à 0,1% (p/p) de triéthanolamine,
> c3) de 0,01% (p/p) à 1% d'éthoxylate de glycérol,

au moins l'un parmi :

> d1) de 0,2% (p/p) à 1,0% (p/p) de tétra(2-hydroxypropyl)éthylènediamine,
> d2) de 0,02% (p/p) à 1,0% (p/p) de polyéthylèneglycol, d3) de 0,01% (p/p) à 0,1% (p/p) de pentaérythritol,

au moins l'un parmi :

> e1) de 0,2% (p/p) à 1,5% (p/p) de tolyltriazole,
> e2) de 0,01% (p/p) à 0,5% (p/p) de benzotriazole,
> e3) de 0,01% (p/p) à 0,25% (p/p) d'acide aspartique,
> e4) de 0,01% (p/p) à 0,5% (p/p) d'acide sébacique,
> e5) de 0,01% (p/p) à 0,1% (p/p) de molybdate de sodium dihydraté,
> e6) de 0,01% (p/p) à 0,1% (p/p) de morpholine,
> e7) de 0,01% (p/p) à 0,3% (p/p) d'oxyde molybdique,
> e8) de 0,01% (p/p) à 1,0% (p/p) de borax,

et facultativement un ou plusieurs élément(s) parmi,

> f) de 0,05% (p/p) à 0,5% (p/p) de polymère de polyacrylate de sodium,
> g) de 0,01% (p/p) à 0,5% (p/p) de triisopropanolamine,
> h) de 0,01% (p/p) à 0,05% (p/p) d'hydroxyde de sodium,
> i) de 0,01% (p/p) à 1,5% (p/p) d'un biocide,
> j) de 0,01 à 10% (p/p) de monopropylène glycol.

**11.** Fluide de transfert de chaleur selon la revendication 10, comprenant :

> a) de 40,0% (p/p) à 50,0% (p/p) de glycérine,
> b) et de 40,65% (p/p) à 59,44% (p/p) d'eau,

au moins l'un parmi :

> c1) de 0,01% (p/p) à 0,5% (p/p) d'éther monododécylique de décaéthylène glycol,
> c2) de 0,01% (p/p) à 0,1% (p/p) de triéthanolamine,
> c3) de 0,01% (p/p) à 1% d'éthoxylate de glycérol,

et :

> d1) de 0,2% (p/p) à 1,0% (p/p) de tétra(2-hydroxypropyl)éthylènediamine,
> d2) de 0,02% (p/p) à 1,0% (p/p) de polyéthylèneglycol,

d3) de 0,01% (p/p) à 0,1% (p/p) de pentaérythritol,

et :

e1) de 0,2% (p/p) à 1,5% (p/p) de tolyltriazole,
e3) de 0,01% (p/p) à 0,25% (p/p) d'acide aspartique,
e6) de 0,01% (p/p) à 0,1% (p/p) de morpholine,
e7) de 0,01% (p/p) à 0,3% (p/p) d'oxyde molybdique,
e8) de 0,01% (p/p) à 1,0% (p/p) de borax,

et,

f) de 0,05% (p/p) à 0,5% (p/p) de polymère de polyacrylate de sodium,
g) de 0,01% (p/p) à 0,5% (p/p) de triisopropanolamine, et facultativement un ou plusieurs élément(s) parmi ,
h) de 0,01% (p/p) à 0,05% (p/p) d'hydroxyde de sodium,
i) de 0,01% (p/p) à 1,5% (p/p) d'un biocide,
j) de 0,01 à 10% (p/p) de monopropylène glycol.

12. Fluide de transfert de chaleur selon la revendication 10 ou 11, comprenant :

a) 43 à 47% (p/p) de glycérine,
b) 50,24% (p/p) à 55,50% (p/p) d'eau,
c1) 0,075 à 0,125% (p/p) d'éther monododécylique de décaéthylène glycol,
c2) 0,25 à 0,35% (p/p) de triéthanolamine,
d1) 0,25 à 0,75% (p/p) de tétra(2-hydroxypropyl) éthylènediamine,
d2) 0,075 à 0,125% (p/p) de polyéthylèneglycol
d3) 0,025 à 0,075% (p/p) de pentaérythritol,
e1) 0,25 à 0,35% (p/p) de tolyltriazole,
e3) 0,025 à 0,075% (p/p) d'acide aspartique,
e6) 0,04 à 0,08% (p/p) de morpholine,
e7) 0,01 à 0,03% (p/p) d'oxyde molybdique,
e8) 0,35 à 0,55% (p/p) de borax,
f) 0,075 à 0,125% (p/p) de polymère de polyacrylate de sodium, et
g) 0,075 à 0,125% (p/p) de triisopropanolamine.

13. Système de panneau solaire comprenant un fluide de transfert de chaleur selon l'une quelconque des revendications 1 à 12.

14. Système de pompe à chaleur géothermique comprenant un fluide de transfert de chaleur selon l'une quelconque des revendications 1 à 12.

15. Utilisation d'un fluide de transfert de chaleur selon l'une des revendications 1 à 12, dans un système de panneau solaire ou un système de pompe à chaleur géothermique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2540251
- EP 1010740 A
- WO 2005047419 A
- GB 856924 A
- US 2003127624 A
- US 2008048147 A
- JP 2002188074 B

**Non-patent literature cited in the description**

- *DWTA Industry Standard Specification for the Performance of Chemical Inhibitors for Use in Domestic Hot Water Central Heating Systems,* August 2006
- **L. WANG ; C. TIU ; T.-J. LIU.** Effects of nonionic surfactant and associative thickener on the rheology of polyacrylamide in aqueous glycerol solutions. *COLLOID POLYM. SCI.,* 01 February 1996, vol. 274, 138-144